# EUROPÄISCHE PATENTANMELDUNG

(11) **EP 2 559 510 A1**
(43) Veröffentlichungstag der Anmeldung: **20.02.2013**
(21) Anmeldenummer: 12005959.7
(22) Anmeldetag: 20.08.2012
(51) Int. Cl.: B23D 15/12, B21J 7/42

(54) **Vorrichtung zur Bearbeitung, insbesonderes zum adiabatischen Trenne, eines Werkstücks**

(30) Priorität: 19.08.2011 DE 102011110663; 19.08.2011 DE 202011104646 U
(71) Anmelder: Karl Klink GmbH, 75223 Niefern-Öschelbronn (DE)
(72) Erfinder: Scheurenbrand, Holger, Dipl.-Ing., 75223 Niefern-Öschelbronn (DE); Keller, Robert, Dipl.-Ing., 75223 Niefern-Öschelbronn (DE)
(74) Vertreter: Leitner, Waldemar

(57) **Zusammenfassung**

Die Erfindung betrifft eine Vorrichtung zur Bearbeitung, insbesondere zum adiabatischen Trennen, eines Werkstücks, das mindestens ein zyklisch druckbeaufschlagbares Bearbeitungswerkzeug (4) aufweist, das in einer Werkzeugführung (3a, 3b) geführt und von einer Antriebseinrichtung (10) angetrieben ist, wobei die Antriebseinrichtung (10) eine Kopplungseinrichtung aufweist, durch welche das Bearbeitungswerkzeug (4) in einer Ankoppelposition mit der Antriebseinrichtung (10) verbindbar und einer Entkoppelposition von dieser entkoppelbar ist, wobei durch die Werkzeugführung (3a, 3b) das Bearbeitungswerkzeug (4) von der Entkoppelposition zum unteren Totpunkt geführt ist, wobei die Vorrichtung (1) eine Rückholeinheit aufweist, durch welche das Bearbeitungswerkzeug (4) von seinem unteren Totpunkt zu seinem Ankoppelpunkt führbar ist, und wobei die Antriebseinrichtung (10) mindestens eine in einer konstanten Winkelgeschwindigkeit rotierende Antriebsscheibe (11a, 11 b) aufweist, die mit dem Bearbeitungswerkzeug (4) lösbar wirkverbunden ist.

## Beschreibung

Die Erfindung betrifft eine Vorrichtung zur Bearbeitung, insbesondere zum adiabatlschen Trennen, eines Werkstücks, die mindestens ein zyklisch druckbeaufschlagbares Bearbeitungswerkzeug aufweist, das in einer Werkzeugführung geführt und von einer Antriebseinrichtung angetrieben ist, wobei die Antriebseinrichtung eine Kopplungseinrichtung aufweist, durch welche das Bearbeitungswerkzeug in einer Ankoppelposition mit der Antriebseinrichtung verbindbar und einer Entkoppelposition von dieser lösbar ist, wobei durch die Werkzeugführung das Bearbeitungswerkzeug von der Entkoppelposition zum unteren Totpunkt geführt ist, und wobei die Vorrichtung eine Rückholeinheit aufweist, durch welche das Bearbeitungswerkzeug von seinem unteren Totpunkt zu seinem Ankoppelpunkt führbar ist.

Eine derartige Vorrichtung ist aus der DE 10 2007 057 638 A1 bekannt und wird insbesondere zum Trennen, insbesondere zum adiabatischen Trennen eines Werkstücks eingesetzt Bei einem derartigen adiabatischen Trennen ist eine hohe Auftreffgeschwindigkeit des Bearbeitungswerkzeugs auf das zu trennende Werkstück erforderlich, damit gradarme, plane Trennschnitte erzeugt werden. Das Bearbeitungswerkzeug wird von seiner Ausgangslage an einem oberen Totpunkt der zyklischen Arbeitsbewegung beschleunigt und soll dann bei Auftreffen auf das zu bearbeitende Werkstück, also knapp vor dem unteren Totpunkt der von ihm zyklisch durchgeführten Arbeitsbewegung, eine möglichst hohe Geschwindigkeit aufweisen. Nach Durchführung der Trennoperation kehrt das Bearbeitungswerkzeug seine Bewegungsrichtung um und wird dann in seine Ausgangslage zum oberen Totpunkt zurückgeführt und dann anschließend wieder in Richtung des unteren Totpunkts beschleunigt. Die Antriebseinrichtung weist eine Kopplungseinrichtung auf, durch welche das Bearbeitungswerkzeug in einer Ankoppelposition mit der Antriebseinrichtung verbindbar und einer Entkoppelposition von dieser entkoppelbar ist, dass durch die Werkzeugführung das Bearbeitungswerkzeug von der Entkoppelposition zum unteren Totpunkt geführt ist, und dass die Vorrichtung eine Rückholeinheit aufweist, durch welche das Bearbeitungswerkzeug von seinem unteren Totpunkt zu seinem Ankoppelpunkt führbar ist.

Hierzu weist der als Bearbeitungswerkzeug fungierende Hammer der bekannten Vorrichtung eine Ausnehmung auf, in die während der Beschleunigungsphase ein Mitnehmer der Antriebseinrichtung eingreift. Der Hammer wird durch eine Führung geführt. Zum Rückstellen des Hammers zur Übergabeposition bzw. zum Übergabebereich der Antriebseinrichtung kommt ein Rückstellmitnehmer einer Rückstellvorrichtung zum Einsatz, wobei durch das Aufwärtsfahren des Rückstellmitnehmers der Hammer nach oben befördert wird. Im oberen Totpunkt wird dann der Mitnehmer der zu diesem Zeitpunkt stillstehenden Antriebseinrichtung in die Ausnehmung des Hammers eingeführt und die Antriebseinrichtung wird dann beschleunigt. An einem Entkoppelpunkt tritt der Mitnehmer aus der Ausnehmung des Hammers aus und dieser bewegt sich weiter entlang der Führung nach unten in Richtung Werkstück.

Dieser intermittierende Antrieb, der bei jedem Arbeitszyklus ein Beschleunigen der Antriebseinrichtung und danach eine Verzögerung bis zum Stillstand des mit dem Hammer zusammenwirkenden Mitnehmers im oberen Totpunkt bedingt, ist in nachteiliger Art und Weise antriebstechnisch nur schwierig zu realisieren.

Es ist Aufgabe der vorliegenden Erfindung, eine Vorrichtung der eingangs genannten Art derart weiterzubilden, dass in einer antriebstechnisch einfachen Art und Weise eine möglichst große Auftreffgeschwindigkeit des Bearbeitungswerkzeugs auf das zu bearbeitende, insbesondere adiabatisch zu trennende Werkstück gegeben ist.

Diese Aufgabe wird erfindungsgemäß dadurch gelöst, dass die Antriebseinrichtung mindestens eine mit einer konstanten Winkelgeschwindigkeit rotierende Antriebsscheibe aufweist, die mit dem Bearbeitungswerkzeug lösbar wirkverbunden ist, dass die mindestens eine Antriebsscheibe einen Mitnehmer aufweist, durch den das Bearbeitungswerkzeug beaufschlagbar ist, dass im oder im Bereich der Ankoppelposition der oder die Mitnehmer der oder beider mit der konstanten Winkelgeschwindigkeit rotierenden Antriebsscheiben den oder die Mitnehmer beaufschlagen und somit das Bearbeitungswerkzeug an die Antriebseinrichtung ankoppelt, und dass bei einer Phasenlage von 90° oder im Bereich dieser Phasenlage das Bearbeitungswerkzeug von der oder beiden Antriebsscheiben entkoppelbar und mit einer in dieser Entkoppelpositlon gegebenen Geschwindigkeit vₘₐₓ in Richtung des unteren Totpunkts bewegbar ist.

Durch die erfindungsgemäßen Maßnahmen wird in vorteilhafter Art und Weise eine Vorrichtung ausgebildet, die eine hohe Auftreffgeschwindigkeit des Bearbeitungswerkzeugs auf das zu bearbeitende, insbesondere adiabatisch zu trennende Werkstück ermöglicht. Indem nun vorgesehen ist, dass die Wirkverbindung zwischen der Antriebseinrichtung und dem Bearbeitungswerkzeug - vorzugsweise bei der Maximalgeschwindigkeit der Antriebseinrichtung in Bewegungsrichtung des Bearbeitungswerkzeugs - gelöst wird, wird erreicht, dass das Bearbeitungswerkzeug - ungehindert von der dann abnehmenden Geschwindigkeit der Antriebseinrichtung - sich dann mit der zum Zeitpunkt der Entkopplung gegebenen Geschwindigkeit in Richtung des Werkstücks fortbewegt. Hierdurch wird eine hohe Auftreffgeschwindigkeit gewährleistet.

Die Antriebsreinrichtung weist erfindungsgemäß mindestens eine Antriebsscheibe auf, die mit dem Bearbeitungswerkzeug lösbar wirkverbunden ist. Hierbei wird bevorzugt, dass das Bearbeitungswerkzeug symmetrisch von zwei synchronisierten Antriebsscheiben angetrieben wird. Die oder beide Antriebsscheiben beaufschlagen das Bearbeitungswerkzeug über jeweils einen Mitnehmer und der Wirkeingriff zwischen dem Mitnehmer und dem Bearbeitungswerkzeug wird am Entkoppelpunkt gelöst. Eine derartige Maßnahme besitzt den Vorteil, dass hierdurch die Antriebsscheiben mit konstanter Geschwindigkeit betrieben werden können, was antriebstechnisch von Vorteil ist.

Vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1:: eine perspektivische Ansicht eines schematisch dargestellten Ausführungsbeispiels der Vorrichtung,
- Figur 2:: eine Vorderansicht des Ausführungsbeispiels der Figur 1 zu Beginn des Beschleunigungsvorgangs,
- Figur 3:: eine Draufsicht auf das Ausführungsbeispiel der Figur 1 zu Beginn des Beschleunigungsvorgangs,
- Figur 4:: eine Seitenansicht des Ausführungsbeispiels der Figur 1 zu Beginn des Beschleunigungsvorgangs,
- Figur 5:: eine perspektivische Ansicht des Ausführungsbeispiels der Figur 1 während des Beschleunigungsvorgangs,
- Figur 6:: eine Vorderansicht des Ausführungsbeispiels der Figur 1 während des Beschleunigungsvorgangs,
- Figur 7:: eine perspektivische Ansicht des Ausführungsbeispiels während des Entkoppelvorgangs,
- Figur 8:: eine Vorderansicht des Ausführungsbeispiels der Figur 1 während des Entkoppelvorgangs,
- Figur 9:: eine schematische Darstellung einer ersten Ausführungsform einer Antriebseinrichtung,
- Figur 10:: eine schematische Darstellung einer zweiten Ausführungsform einer Antriebseinrichtung, und
- Figur 11:: eine schematische Darstellung einer dritten Ausführungsform einer Antriebseinrichtung

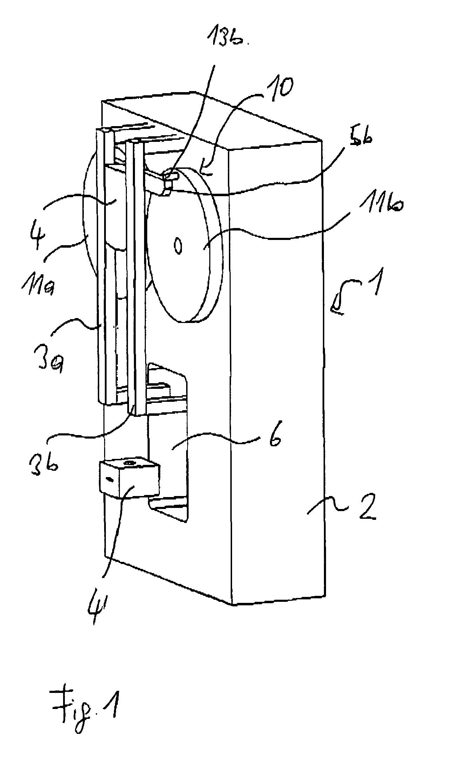

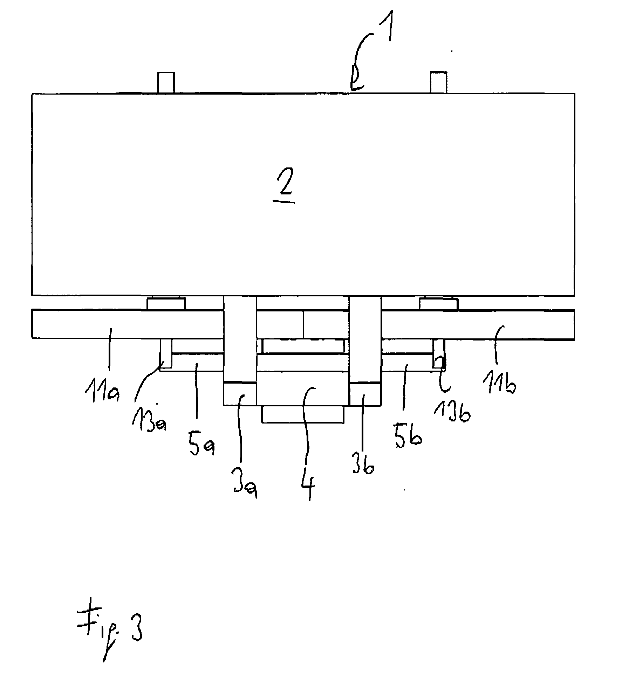

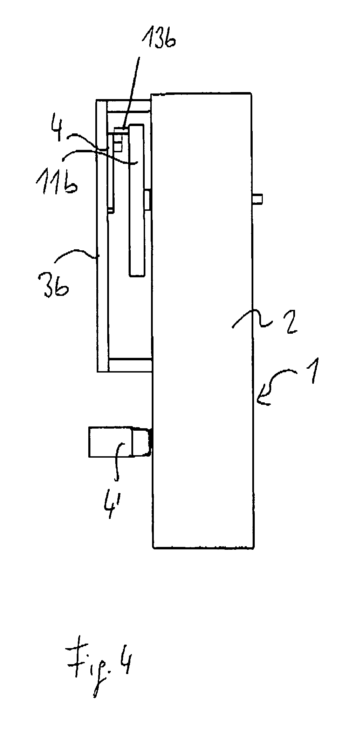

In den Figuren 1 bis 4, 5 und 6 sowie 7 und 8 ist nun ein allgemein mit 1 bezeichnetes Ausführungsbeispiel einer Vorrichtung zur Bearbeitung, insbesondere zum adiabatischen Trennen, eines Werkstücks in unterschiedlichen Stadien eines Bearbeitungszyklusses dargestellt.

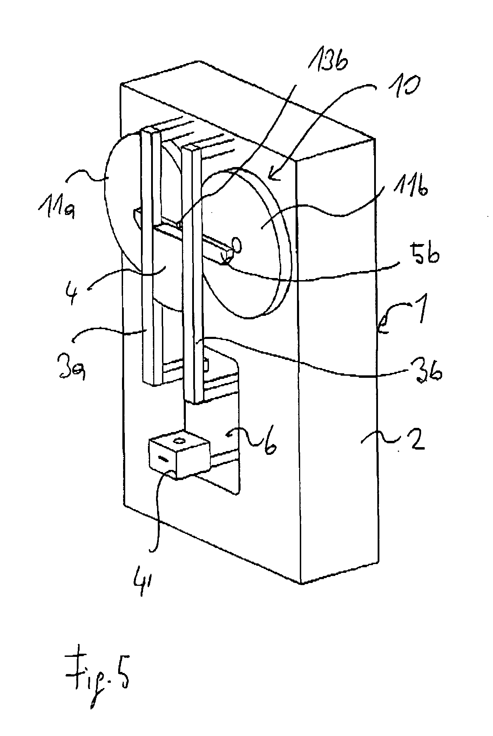

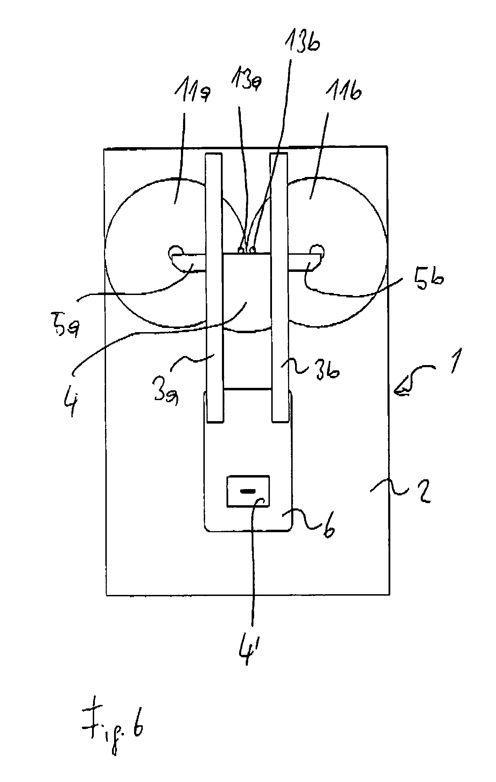

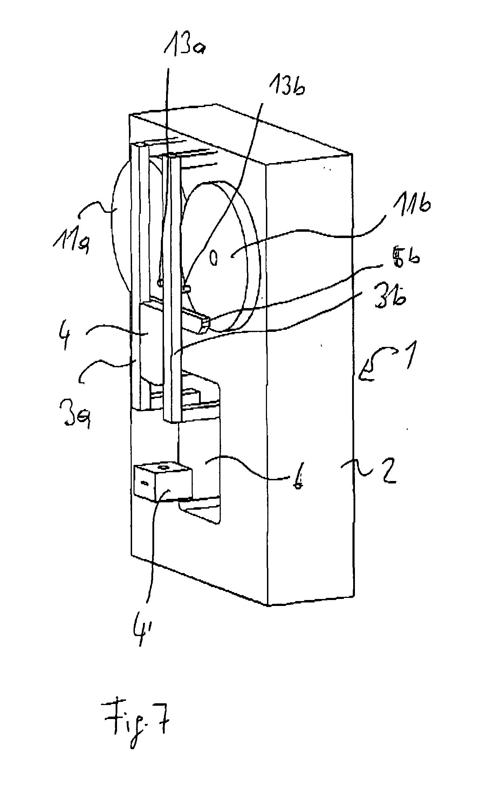

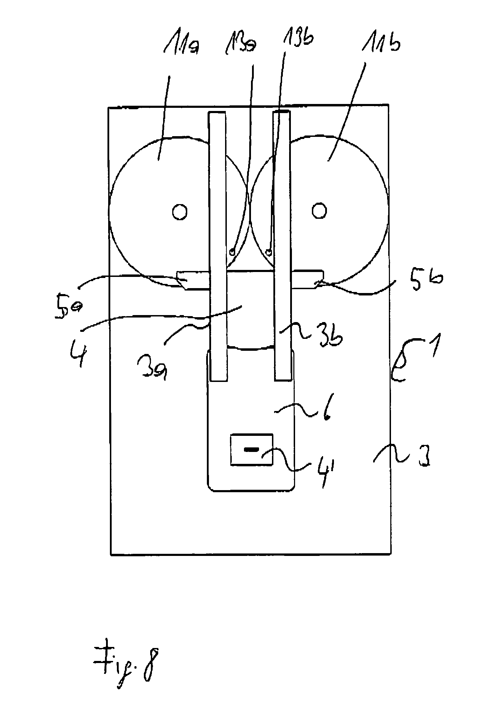

Die Vorrichtung 1 weist ein Maschinengestell 2 auf, in dem zwei Werkzeugführungen 3a, 3b angeordnet sind, in denen ein Bearbeitungswerkzeug 4 verschiebbar geführt ist. Das Bearbeitungswerkzeug 4 wird von einer allgemein mit 10 bezeichneten Antriebseinrichtung angetrieben und führt entlang der Werkzeugführungen 3a, 3b eine zyklische Bewegung durch, wobei während eines ersten Halbzyklusses das Bearbeitungswerkzeug 4 von seiner in den Figuren 1 bis 4 dargestellten Ausgangslage, in der sich das Bearbeitungswerkzeug 4 im oberen Totpunkt des Bearbeitungszyklusses befindet, nach unten bewegt wird. In der in den Figuren 5 und 6 gezeigten Position wird - wie unten noch näher beschrieben - der Wirkeingriff zwischen der Antriebseinrichtung 10 und dem Bearbeitungswerkzeug 4 gelöst. Diese bewegt sich dann - wie in den Figuren 7 und 8 gezeigt - zum unteren Totpunkt des Bearbeitungszyklusses, in dem das Bearbeitungswerkzeug 4 ein Werkstück (nicht gezeigt) beaufschlagt. In dem daran anschließenden zweiten Halbzyklus wird das Bearbeitungswerkzeug 4 von der Antriebseinrichtung 10 von seinem unteren Totpunkt zu seinem oberen Totpunkt zurückbewegt. Die Vorrichtung weist des weiteren eine Zuführöffnung 6 auf, durch welche dem Bearbeitungswerkzeug 4 das zu bearbeitende Werkstück, vorzugsweise ein streifen- oder bandförmiges Werkstück, zugeführt werden kann. In den Figuren 1 bis 7 ist ein Unterwerkzeug 4' gezeigt, welches mit dem Bearbeitungswerkzeug 4 zusammenwirkt und beim Trennvorgang ein Gegenlager für dieses ausbildet.

Im hier beschriebenen Fall weist die Antriebseinrichtung 10 zwei gegenläufig rotierende Antriebsscheiben 11 a, 11 b auf, welche von einem Elektromotor (nicht gezeigt) angetrieben werden. Dem Fachmann ist nachstehender Beschreibung aber ersichtlich, dass auch eine einzige Antriebsscheibe 11a ausreicht und es auch nicht zwingend ist, einen Elektromotor zum Antrieb der oder beider Antriebsscheiben 11a, 11b zu verwenden. Wesentlich ist nur, dass durch die Antriebseinrichtung 10 die vorstehend beschriebene zyklische Bewegung des Bearbeitungswerkzeugs 4 durchführbar ist.

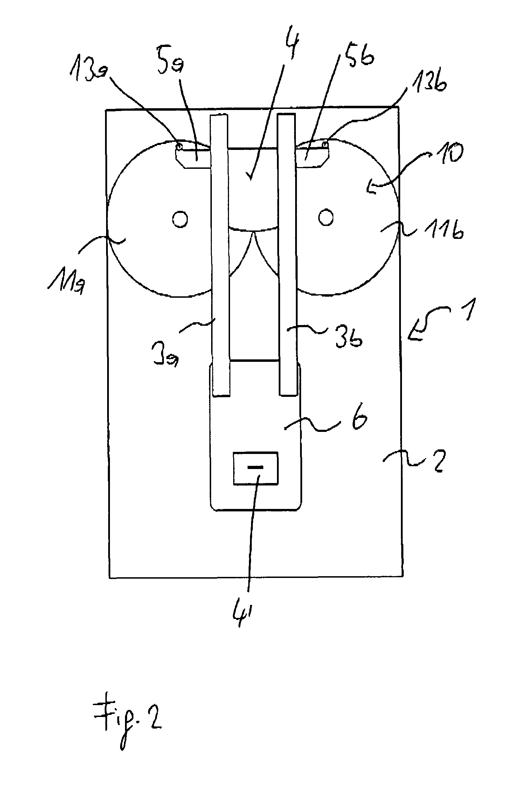

Jede der beiden Antriebsscheiben 11 a, 11 b weist jeweils einen Mitnehmer 13a, 13b auf, der am Bearbeitungswerkzeug 4 angreift. Im hier beschriebenen Fall weist das Bearbeitungswerkzeug 4 an seinen beiden Seiten jeweils einen Ausleger 5a, 5b auf, der - wie insbesondere die Figuren 1 und 2 zeigen - jeweils von dem Mitnehmer 13a, 13b der beiden Antriebsscheiben 11 a, 11 b beaufschlagt wird.

Die Antriebseinrichtung 10 soll nun - insbesondere mit einer konstanten Winkelgeschwindigkeit der Antriebsscheiben 11a, 11b - eine hohe Auftreffgeschwindigkeit des Bearbeitungswerkzeugs 4 auf das Werkstück ermöglichen, d. h., die Geschwindigkeit des Bearbeitungswerkzeugs 4 entlang der Werkzeugführungen 2a, 2b soll beim Auftreffen auf das Werkstück möglichst hoch sein. Hier soll der einfachen Beschreibung halber - da üblicherweise die Bewegung des Bearbeitungswerkzeugs 4 in einer vertikalen Richtung erfolgt - von einer Vertikalgeschwindigkeit gesprochen werden. Dem Fachmann ist klar ersichtlich, da es nicht zwingend ist, dass das Bearbeitungswerkzeug 4 in einer vertikalen Richtung geführt wird. Vielmehr kann es auch schräg oder auch horizontal verlaufend von den Werkzeugführungen 3a, 3b geführt werden. Die Verwendung des Begriffs "Vertikalgeschwindigkeit" ist daher nicht dahingehend zu verstehen, dass die Vorrichtung auf eine derartige vertikale Bewegung des Bearbeitungswerkzeugs 4 beschränkt ist. Im Bereich des oberen Totpunkts ist somit die Vertikalgeschwindigkeit des Bearbeitungswerkzeugs 4 gleich Null. Wie in den Figuren 1 bis 4 dargestellt, beaufschlagen im oder im Bereich des oberen Totpunkts die Mitnehmer 13a, 13b der beiden Antriebsscheiben 11a, 11b die Ausleger 5a, 5b des Bearbeitungswerkzeugs 4, wodurch dieses beschleunigt wird. Bei einer Phasenlage von 90° - dargestellt in den Figuren 5 und 6 - erreicht dann das Bearbeitungswerkzeug 4 seine Maximalgeschwindigkeit, die im wesentlichen gleich der Umfangsgeschwindigkeit der Mitnehmer 13a, 13b der Antriebsscheiben 11a, 11b ist.

Wesentlich ist nun, dass an einem Entkoppelpunkt, der bei einer Phasenlage von 90° oder im Bereich dieser Phasenlage liegt, das Bearbeitungswerkzeug 4 von den beiden Antriebsscheiben 11 a, 11b entkoppelt wird und sich somit - wie in den Figuren 7 und 8 dargestellt - weiterhin mit einer Vertikalgeschwindigkeit vₘₐₓ in Richtung des unteren Totpunkts bewegen kann und somit mit einer hohen Geschwindigkeit auf das zu bearbeitende, insbesondere adiabatisch zu trennende Werkstück auftrifft. Während sich das von den Antriebsscheiben 11a, 11b entkoppeltes Bearbeitungswerkzeug 4 in Richtung seines unteren Totpunkts bewegt, laufen die Mitnehmer 13a, 13b der beiden Antriebsscheiben 11a, 11b weiter, wobei aber ihre Vertikalgeschwindigkeit abnimmt und am unteren Totpunkt Null beträgt, während diejenige des von den Antriebsscheiben 11a, 11b entkoppelte Bearbeitungswerkzeug 4 weiterhin vₘₐₓ beträgt, wenn man von Reibungsverlusten, etc. absieht.

Die hier beschriebene Entkoppelung des Bearbeitungswerkzeugs 4 von der Antriebseinrichtung 10 bewirkt, dass in vorteilhafter Art und Weise nur die Richtungskomponente der Tangentialgeschwindigkeit der oder der beiden das Bearbeitungswerkzeug 4 beaufschlagenden Antriebsscheiben 11a, 11b der Antriebseinrichtung 10 ausgenützt wird, so dass eine Beschleunigung des Bearbeitungswerkzeugs 4 erreicht wird, die beim Wert Null am oberen Totpunkt beginnt und mit der Maximalgeschwindigkeit vₘₒₓ, welche durch die Tangentialgeschwindigkeit der Mitnehmer 13a, 13b zum Zeitpunkt der Entkoppelung des Bearbeitungswerkzeugs 4 von den Antriebsscheiben 11a, 11b festgelegt wird, endet. Eine derartige Maßnahme besitzt nicht nur den Vorteil, dass eine hohe Auftreffgeschwindigkeit des Bearbeitungswerkzeugs 4 auf das Werkstück erzielt wird. Vielmehr besitzt die beschriebene Maßnahme des weiteren den Vorteil, dass hier durch die Antriebseinrichtung 10 mit einer konstanten Winkelgeschwindigkeit betrieben werden kann, was antriebstechnisch von Vorteil ist.

Das Entkoppeln der Antriebseinrichtung 10 und des Bearbeitungswerkzeugs 4 erfolgt hierbei bei der beschriebenen Anordnung in vorteilhafter Art und Weise selbsttätig, da bei einer Phasenlage von 90° sich das Bearbeitungswerkzeug 4 mit einer Vertikalgeschwindigkeit vₘₐₓ bewegt, während die Vertikalgeschwindigkeit der Mitnehmer 13a, 13b von diesem Entkoppelpunkt zu dem unteren Totpunkt sukzessive abnimmt, so dass die Mitnehmer 13a, 13b hinter den sich mit vorgenannter Geschwindigkeit weiter abwärts bewegenden Bearbeitungswerkzeug 4 zurückbleiben und derart von den Auslegern 5a, 5b getrennt werden. Ein weiterer Vorteil der beschriebenen Vorrichtung besteht darin, dass hierdurch eine gleichmäßige Beschleunigung des Bearbeitungswerkzeugs 4 erzielt werden kann, ohne dass in der Beschleunigungsphase das Bearbeitungswerkzeug 4 und insbesondere seine Ausleger 5a, 5b und/oder die Mitnehmer 13a, 13b einer großen mechanischen Belastung, insbesondere harten Schlägen beim Aufeinandertreffen, ausgesetzt sind.

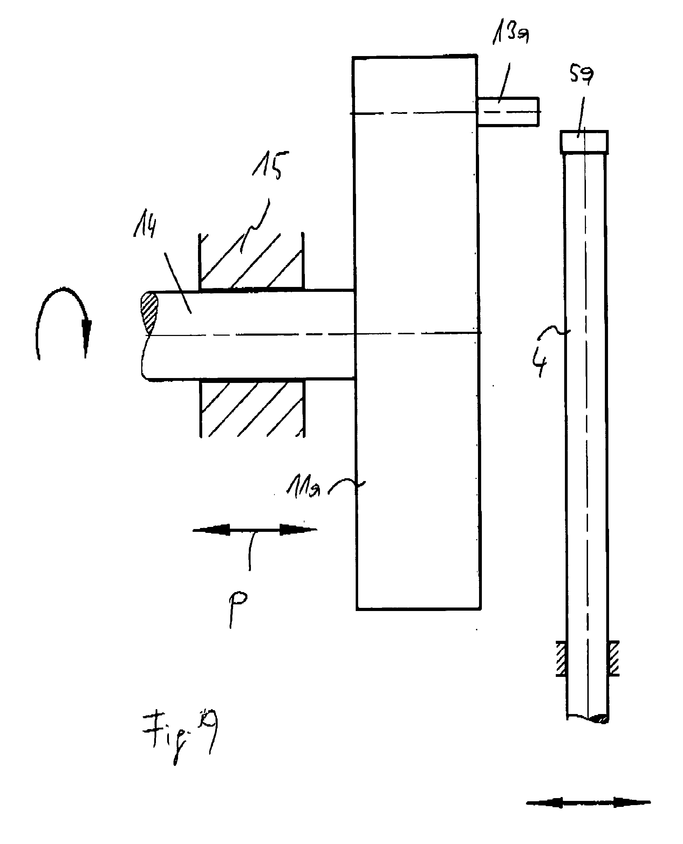

In der Figur 9 ist nun eine erste Ausführungsform der Antriebseinrichtung 10 dargestellt, welche mittels der nachfolgend beschriebenen Kopplungseinrichtung eine einfache Entkoppelung des Bearbeitungswerkzeugs 4 von den Antriebsscheiben 11a, 11b ermöglicht. Diese Figur zeigt die mit einer Welle 14, welche in einer Wellenlagerung 15 gelagert ist, verbundene Antriebsscheibe 11a und ihren Mitnehmer 13a. Außerdem ist in dieser schematischen Darstellung das Bearbeitungswerkzeug 4 sowie der Ausleger 5a zu sehen. Das Bearbeitungswerkzeug 4 befindet sich in seiner Ausgangsstellung am oberen Totpunkt. Am oberen Totpunkt ist, tritt der Mitnehmer 13a der Antriebsscheibe 11a in Wirkeingriff mit dem Ausleger 5a. Durch die Rotationsbewegung der Antriebsscheibe 11a wird das Bearbeitungswerkzeug 4 dadurch beschleunigt und erreicht am Entkoppelpunkt, im allgemeinen also bei einer Phasenlage von 90°, seine Maximalgeschwindigkeit vₘₐₓ.

Wie nun aus der Figur 9 ersichtlich ist, ist bei der Antriebseinrichtung 10 vorgesehen, dass die zu diesem Zeitpunkt stattfindende Entkoppelung des Bearbeitungswerkzeugs 4 dadurch geschieht, dass - wie durch den Doppelpfeil P angedeutet - die Antriebsscheibe 11a vom Bearbeitungswerkzeug 4 wegbewegt wird, so dass der Wirkeingriff zwischen dem Mitnehmer 13a und dem Ausleger 5a des Bearbeitungswerkzeugs 4 aufgehoben wird. Der gleiche Ablauf findet auch bei der Antriebsscheibe 11b statt, so dass auch der Wirkeingriff zwischen dem zweiten Mitnehmer 13b und dem zweiten Ausleger 5b aufgehoben wird.

Das Bearbeitungswerkzeug 4 bewegt sich dann mit seiner Maximalgeschwindigkeit nach unten, während die Antriebsscheiben 11a, 11b mit konstanter Geschwindigkeit vₘₐₓ weiterbewegt werden.

Nachdem das Bearbeitungswerkzeug 4 seine Bearbeitungsoperation durchgeführt hat und somit am unteren Totpunkt eine Vertikalgeschwindigkeit von Null erreicht hat, wird es durch eine nicht gezeigte Rückholeinheit in seine Ausgangsposition, also zum oberen Totpunkt, zurückbewegt. Die Mitnehmer 13a, 13b der Antriebsscheiben 11a, 11b sind zwischenzeitlich in ihre Ausgangsstellung zurückbewegt worden, so dass die Mitnehmer 13a, 13b am Ankoppelpunkt wieder die Ausleger 5a, 5b des Bearbeitungswerkzeugs 4 beaufschlagen können. Der Vorteil hierbei ist, dass die Ankopplung des Bearbeitungswerkzeugs 4 an die Antriebsscheiben 11a, 11b im Bereich des oberen Totpunkts bei einer Geschwindigkeit des Bearbeitungswerkzeugs 4 von vorzugsweise Null erfolgt. Dies besitzt den Vorteil, dass hierdurch das Ankoppeln des Bearbeitungswerkzeugs 4 an die Antriebsscheiben 11 a, 11 b - wie vorstehend beschrieben - antriebstechnisch einfach durchzuführen ist. Nachdem die Mitnehmer 13a, 13b hier die Ausleger 5a, 5b des Bearbeitungswerkzeugs 4 beaufschlagen, kann ein neuer Bearbeitungszyklus beginnen.

Diese Vorgangsweise - das Zurückbewegen des Bearbeitungswerkzeugs 4 durch eine separate Rückholeinheit - besitzt den Vorteil, dass hierdurch in einfacher Art und Weise die Taktrate des Bearbeitungswerkzeugs 4 und somit der Vorrichtung verändert werden kann, indem ohne dabei die Winkelgeschwindigkeit der Antriebsscheiben 11a, 11b zu verändern, der Zeitraum, der für das Zurückbewegen des Bearbeitungswerkzeugs 4 von seiner Bearbeitungslage am unteren Totpunkt in seine Ausgangslage am oberen Totpunkt benötigt wird, variiert wird. Wird z. B. das Bearbeitungswerkzeug 4 so rasch in seine Ausgangslage zurückgestellt, dass es sich in dieser bereits befindet, wenn die Mitnehmer 13a, 13b den Ankoppelpunkt erreichen, so wird das Bearbeitungswerkzeug 4 bereits bei der darauf folgenden Umdrehung der Antriebsscheiben 11a, 11b wiederum von den Mitnehmer 13a, 13b beaufschlagt und führt seinen nächsten Arbeitstakt durch. Erfolgt die Rückstellung des Bearbeitungswerkzeugs 4 nun langsamer, so laufen die Antriebsscheiben 11a, 11b ein oder mehrmals durch, ohne dass das Bearbeitungswerkzeug 4 von ihren Mitnehmern 13a, 13b beaufschlagt wird. Dementsprechend verringert sich die Taktrate des Bearbeitungswerkzeugs 4.

Bei der vorstehenden Beschreibung wurde davon ausgegangen, dass zum Entkoppeln des Bearbeitungswerkzeugs 4 von der Antriebseinrichtung 10 die Antriebsscheiben 11a, 11b von diesem wegbewegt werden. Natürlich ist es auch möglich, die Position der Antriebsscheiben 11a, 11b beizubehalten und anstelle dessen das Bearbeitungswerkzeug 4 von den Antriebsscheiben 11a, 11b wegzubewegen. Auch eine Kombination dieser beiden Maßnahmen ist möglich. Das Grundprinzip der bei der ersten Ausführungsform verwendeten Entkopplung ist also, dass durch lineare Relativbewegungen zwischen den Antriebsscheiben 11a, 11b und dem Bearbeitungswerkzeug 4 der Wirkeingriff zwischen den Mitnehmern 13a, 13b und dem Bearbeitungswerkzeug 4 aufgehoben und derart das Bearbeitungswerkzeug 4 hergestellt und von der Antriebseinheit 10 in dem Entkoppelungspunkt gelöst und am Koppelpunkt wiederhergestellt wird.

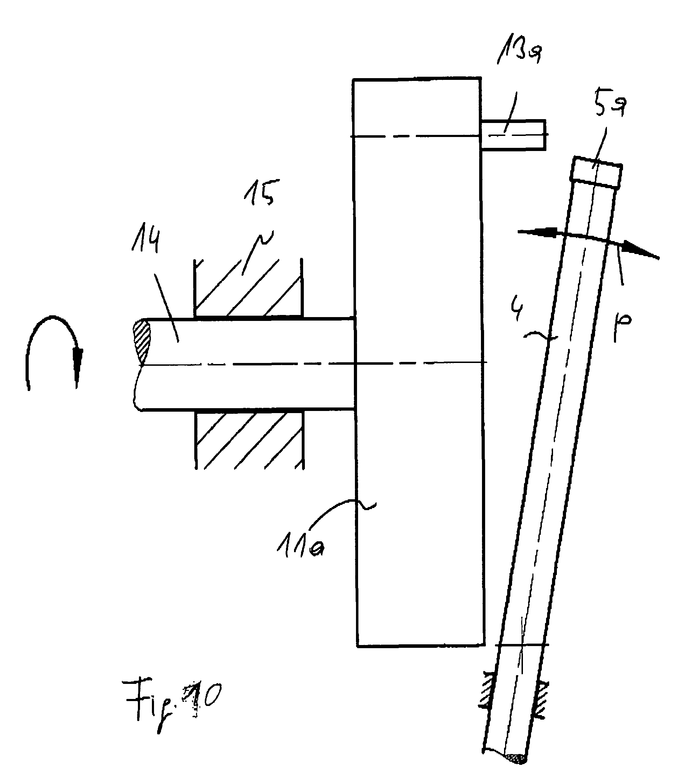

In der Figur 10 ist nun eine zweite Ausführungsform der Antriebseinrichtung 10 dargestellt, wobei einander entsprechende Bauteile mit den gleichen Bezugszeichen versehen und nicht mehr erneut erläutert werden. Diese Figur zeigt daher wiederum die Antriebsscheibe 11a, welche mit der Welle 14 verbunden ist, die von der Wellenlagerung 15 gelagert wird, sowie das Bearbeitungswerkzeug 4. Der wesentliche Unterschied zwischen der ersten Ausführungsform der Antriebseinrichtung 10 gemäß der Figur 9 ist, dass der Wirkeingriff der Mitnehmer 13a, 13b vom Bearbeitungswerkzeug 4 dadurch aufgehoben wird, dass - wie durch den Doppelpfeil P wiederum angedeutet - zum Entkoppeln des Bearbeitungswerkzeugs 4 dieses von den Antriebsscheiben 11a und 11b nicht linear wegbewegt, sondern weggekippt wird.

Dem Fachmann ist aus obiger Beschreibung klar ersichtlich, dass die beiden vorgestellten Varianten nicht die einzigen Möglichkeiten sind, das Bearbeitungswerkzeug 4 von der Antriebseinrichtung 10 zu entkoppeln. So ist es z. B. auch möglich, dass anstelle einer- linear oder bogenförmig verlaufend - Relativbewegung zwischen den Antriebsscheiben 11a, 11b und dem Bearbeitungswerkzeug 4 die Mitnehmer 13a, 13b und/oder die Ausleger 5a, 5b zurückgezogen und/oder zurückgeklappt werden, damit der Wirkeingriff zwischen diesen und dem Bearbeitungswerkzeug 4 aufgehoben wird. Natürlich ist auch eine Kombination dieser Maßnahme möglich, die darin besteht, dass zusätzlich zur Relativbewegung zwischen den Antriebsscheiben 13a, 13b und dem Bearbeitungswerkzeug 4 auch eine Bewegung der Mitnehmer 13a, 13b und/oder der Ausleger 5a, 5b erfolgt.

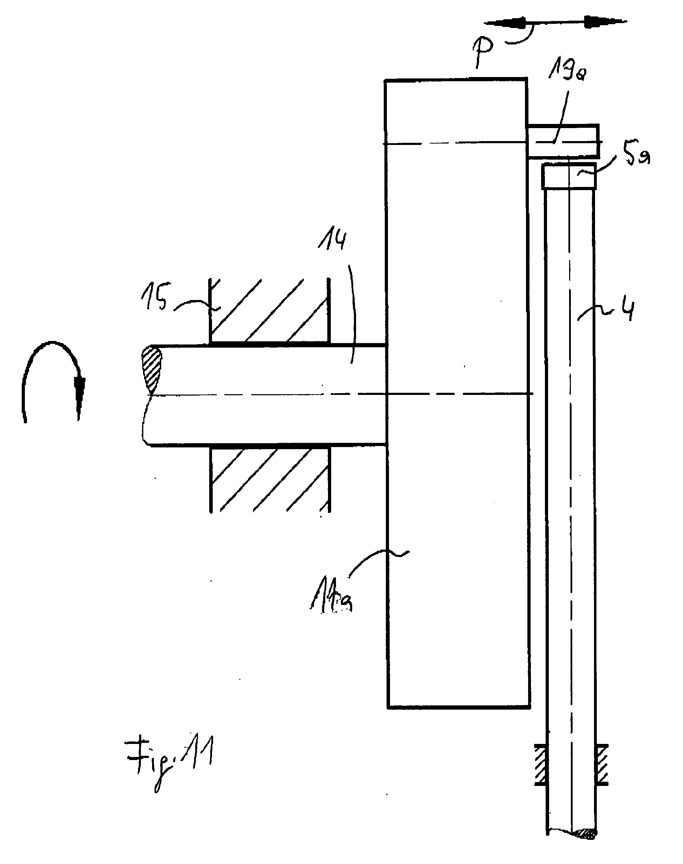

Das vorstehend angesprochene Zurückziehen der Mitnehmer 13a, 13b ist nun in der Figur 11 dargestellt. Dies zeigt wiederum die Antriebsscheibe 11a, welche mit der Welle 14 verbunden ist, die von dem Wellenlager 15 gelagert ist, sowie das Bearbeitungswerkzeug 4. Wie durch den Doppelpfeil P angeordnet, wird die Entkoppelung des Bearbeitungswerkzeugs 4 von den Antriebsscheiben 11a, 11b dadurch erreicht, dass die Mitnehmer 13a, 13b zurückgezogen werden, wodurch der Wirkeingriff zwischen diesen und den Auslegern 5a, 5b aufgehoben wird. Um den Wirkeingriff zwischen der Antriebsscheiben 11a, 11b und dem Bearbeitungswerkzeug 4 wiederherzustellen, werden zu einem späteren Zeitpunkt und vor der Ankoppelung des Bearbeitungswerkzeugs 4 an die Antriebsscheiben 11a, 11b die Mitnehmer 13a, 13b wieder in Richtung des Bearbeitungswerkzeugs 4 ausgefahren.

Dem Fachmann ist aus vorstehender Beschreibung ersichtlich, dass die Position der Ausleger 5a, 5b auch die Zeitdauer, während der das Bearbeitungswerkzeug 4 beschleunigt wird, beeinflusst. Bei dem vorstehend beschriebenen Ausführungsbeispiel wurde davon ausgegangen, dass die Lage der Ausleger 5a, 5b derart bemessen ist, dass die Mitnehmer 13a, 13b die Ausleger 5a, 5b und somit das Bearbeitungswerkzeug 4 im oberen Totpunkt beaufschlagen. Werden nun die Ausleger 5a, 5b in der Vertikalrichtung tiefer angesetzt, so erfolgt ein Wirkeingriff zwischen den Mitnehmern 13a, 13b und den Auslegern 5a, 5b nicht bereits im Bereich des oberen Totpunkts, also bei der Phasenlage Null, sondern bei einer späteren Phasenlage. Eine derartige Maßnahme wird zwar nicht bevorzugt, soll aber hier der guten Ordnung halber aber noch erwähnt werden.

Zusammenfassend ist festzuhalten, dass die beschriebene Maßnahme eine Vorrichtung 1 zur Bearbeitung eines Werkstücks, insbesondere zu dessen adiabatischen Trennen, geschaffen wird, welche sich dadurch auszeichnet, dass das Bearbeitungswerkzeug 4 eine hohe Bearbeitungsgeschwindigkeit aufweist. Indem am Entkoppelpunkt der Wirkeingriff zwischen der Antriebseinrichtung 10 und dem Bearbeitungswerkzeug 4 gelöst wird, wird erreicht, dass das Bearbeitungswerkzeug 4 darauf folgend mit einer Geschwindigkeit zum Werkstück bewegt, die im wesentlichen durch die Tangentialgeschwindigkeit der Antriebseinrichtung 10 zum Zeitpunkt der Entkoppelung bestimmt wird, d. h., eine nachfolgende Verlangsamung der Mitnehmer 13a, 13b wirkt sich nicht auf die Geschwindigkeit, mit der das Bearbeitungswerkzeug 4 auf das Werkstück auftrifft, aus. Ein weiterer Vorteil dieser Maßnahme besteht darin, dass die Antriebseinrichtung10 mit einer konstanten Winkelgeschwindigkeit arbeiten kann, da nun nicht mehr eine Verlangsamung derselben beim Auftreffen des Bearbeitungswerkzeugs 4 auf das Werkstück und der nachfolgenden Richtungsumkehr durchgeführt werden muss. Eine derartige Maßnahme resultiert in vorteilhafter Art und Weise in einer antriebstechnisch einfachen Ausbildung der Antriebseinheit 10.

## Patentansprüche

1. Vorrichtung zur Bearbeitung, insbesondere zum adiabatischen Trennen, eines Werkstücks, das mindestens ein zyklisch druckbeaufschlagbares Bearbeitungswerkzeug (4) aufweist, das in einer Werkzeugführung (3a, 3b) geführt und von einer Antriebseinrichtung (10) angetrieben ist, wobei die Antriebseinrichtung (10) eine Kopplungseinrichtung aufweist, durch welche das Bearbeitungswerkzeug (4) in einer Ankoppelposition mit der Antriebseinrichtung (10) verbindbar und einer Entkoppelposition von dieser lösbar ist, wobei durch die Werkzeugführung (3a, 3b) das Bearbeitungswerkzeug (4) von der Entkoppelposition zum unteren Totpunkt geführt ist, und wobei die Vorrichtung (1) eine Rückholeinheit aufweist, durch welche das Bearbeitungswerkzeug (4) von seinem unteren Totpunkt zu seinem Ankoppelpunkt führbar ist, **dadurch gekennzeichnet, dass** die Antriebseinrichtung (10) mindestens eine mit einer konstanten Winkelgeschwindigkeit rotierende Antriebsscheibe (11a, 11 b) aufweist, die mit dem Bearbeitungswerkzeug (4) lösbar wirkverbunden ist, dass die mindestens eine Antriebsscheibe (11 a; 11 b) einen Mitnehmer (13a; 13b) aufweist, durch den das Bearbeitungswerkzeug (4) beaufschlagbar ist, dass im oder im Bereich der Ankoppelposition der oder die Mitnehmer (13a, 13b) der oder beider mit der konstanten Winkelgeschwindigkeit rotierenden Antriebsscheiben (11a, 11b) den oder die Mitnehmer (13a, 13b) beaufschlagen und somit das Bearbeitungswerkzeug (4) an die Antriebseinrichtung (10) ankoppeln, und dass bei einer Phasenlage von 90° oder im Bereich dieser Phasenlage das Bearbeitungswerkzeug (4) von der oder beiden Antriebsscheiben (11a, 11b) entkoppelbar und mit einer in dieser Entkoppelposition gegebenen Geschwindigkeit vₘₐₓ in Richtung des unteren Totpunkts bewegbar ist.

2. Vorrichtung nach einem der vorangehenden Ansprüche, **dadurch gekennzeichnet, dass** das Bearbeitungswerkzeug (4) mindestens einen Ausleger (5a; 5b) aufweist, welcher von dem Mitnehmer (13a; 13b) der Antriebsscheibe (11a; 11b) beaufschlagbar ist.

3. Vorrichtung nach einem der vorangehenden Ansprüche, **dadurch gekennzeichnet, dass** das Bearbeitungswerkzeug (4) und mindestens eine Antriebsscheibe (11a, 11b) zueinander relativbeweglich sind.

4. Vorrichtung nach Anspruch 3, **dadurch gekennzeichnet, dass** das Bearbeitungswerkzeug (4) und mindestens eine Antriebsscheibe (11a, 11b) zueinander relatiwerschieblich in der Vorrichtung (1) angeordnet sind.

5. Vorrichtung nach Anspruch 3 oder Anspruch 4, **dadurch gekennzeichnet, dass** das Bearbeitungswerkzeug (4) und mindestens eine Antriebsscheibe (11a, 11b) zueinander drehbeweglich in der Vorrichtung (1) angeordnet sind.

6. Vorrichtung nach einem der vorangehenden Ansprüche, **dadurch gekennzeichnet, dass** in mindestens einer Antriebsscheibe (11a, 11b) der Mitnehmer (13a, 13b) zurückbewegbar angeordnet ist.

7. Vorrichtung nach einem der vorangehenden Ansprüche, **dadurch gekennzeichnet, dass** mindestens ein Ausleger (5a, 5b) des Bearbeitungswerkzeugs (4) zurückbewegbar angeordnet ist.
